# FASCICULE DE BREVET EUROPEEN

(11) **EP 1 112 830 B1**
(45) Date de publication et mention de la délivrance du brevet: **17.03.2004**
(21) Numéro de dépôt: 00128303.5
(22) Date de dépôt: 22.12.2000
(51) Int. Cl.: B29C 45/14

(54) **Procédé d'assemblage de deux tôles**
Verfahren zum Zusammenbau von zwei Metallblechen
Method for assembling two sheet metals

(30) Priorité: 29.12.1999 FR 9916669
(43) Date de publication de la demande: 04.07.2001
(73) Titulaire: VALEO THERMIQUE MOTEUR, 78321 La Verrière (FR)
(72) Inventeur: Sandjivy, Valérie, 75014 Paris (FR); Guyomard, Jean-Nicolas, 27930 Le Mesnil Fuguet (FR)
(74) Mandataire: Rolland, Jean-Christophe

(56) Documents cités:
- EP-A- 0 360 473
- EP-A- 0 721 831
- US-A- 4 610 072
- US-A- 5 673 472

## Description

La présente invention concerne un procédé d'assemblage d'au moins deux tôles, dans lequel on crée sur lesdites tôles des . formes d'assemblage complémentaires que l'on enrobe par surmoulage de matière plastique pour maintenir les tôles en position assemblée.

On connaît déjà de tels procédés, utilisés notamment dans la réalisation des façades avant de véhicules automobiles. Les figures 1A et 1B illustrent par un exemple le procédé décrit dans le document EP-A-721831.

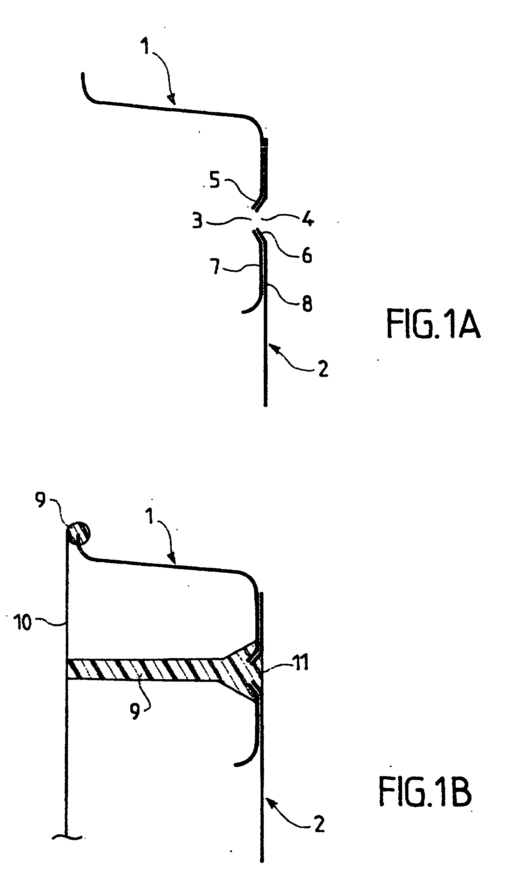

On voit à la figure 1A un ensemble de deux tôles constitué par une poutre supérieure 1 de façade avant de véhicule automobile, sur laquelle doit être montée une béquille 2. On prévoit à cet effet des formes d'assemblage complémentaires sur la poutre 1 et sur la béquille 2.

Ces formes d'assemblage sont chacune constituée d'un trou, 3 et 4 respectivement, dont les bords sont emboutis directement dans un moule de surmoulage en tronc de cône, 5 et 6 respectivement. Les troncs de cône 5 et 6 sont complémentaires de sorte que, lorsque des faces planes, 7 et 8 respectivement, en vis-à-vis sur la poutre 1 et la béquille 2 sont appliquées l'une contre l'autre, le tronc de cône 6 est engagé dans le tronc de cône 5.

La poutre 1 et la béquille 2 ainsi accolées sont enrobées dans de la matière plastique 9 injectée dans une cavité du moule. Cette matière plastique forme un nervurage 10 et traverse en outre les trous 3 et 4 pour se répandre au-delà de ces trous à l'intérieur du tronc de cône 6. Il en résulte, après refroidissement de la matière plasti, que, une sorte de rivetage des deux tôles 1 et 2.

Ce procédé d'assemblage présente l'inconvénient qu'il n'existe pas de liaison mécanique directe entre les deux tôles, la liaison n'étant réalisée que par la matière plastique de surmoulage. Il en résulte un défaut de rigidité de l'assemblage.

Pour résoudre ce problème, le document US-A- 5 673 572 enseigne de sortir les éléments à assembler avant de les placer dans le moule à injection. Cette solution n'est pas entièrement satisfaisante car cela nécessite une étape supplémentaire.

La présente invention vise à pallier cet inconvénient.

L'invention vise notamment un procédé du genre défini en introduction, et prévoit qu'il comporte une étape de sertissage desdites formes d'assemblage complémentaires dans le moule de surmoulage.

Ainsi, les deux tôles sont non seulement assemblées du fait de leur surmoulage commun, mais elles sont en outre mécaniquement liées du fait de leur sertissage. Ce sertissage ne nécessite pas d'opération supplémentaire puisqu'il s'effectue dans le moule de surmoulage.

Des caractéristiques optionnelles de l'invention, complémentaires ou alternatives, sont énoncées ci-après:
- Le sertissage est réalisé lors de la fermeture du moule, par des moyens de sertissage portés par une partie de celui-ci.
- On enrobe les formes d'assemblage complémentaires en injectant la matière plastique dans une cavité du moule libérée par le déplacement des moyens de sertissage.
- Ledit déplacement des moyens de sertissage est provoqué par la pression d'injection de la matière plastique.
- Ledit déplacement s'effectue à l'encontre de moyens de rappel élastique, ces derniers provoquant lors de l'ouverture du moule un mouvement inverse des moyens de sertissage qui facilite le démoulage. On réalise donc un mouvement à double effet, les moyens de sertissage reprenant leur position d'origine à l'issue de l'étape d'éjection de la pièce surmoulée.
- Lesdites formes d'assemblage complémentaires comprennent une buse convergente formée dans l'une des tôles autour d'un premier trou ménagé dans celle-ci et faisant saillie à travers un second trou ménagé dans au moins une autre tôle, le sertissage étant réalisé par l'élargissement du premier trou et le roulage de la buse autour du bord du second trou.

L'invention a également pour objet un moule d'injection pour la mise en oeuvre du procédé comprenant des moyens de sertissage détaillés dans la revendication 7.

Le procédé et/ou le moule selon l'invention sont utilisables notamment pour la réalisation d'une façade avant de véhicule automobile.

On décrira maintenant, à titre d'exemple non limitatif, des modes de réalisation particuliers de l'invention, en référence aux dessins schématiques annexés dans lesquels:
- les figures 1A et 1B illustrent l'état de la technique et ont déjà été décrites;
- les figures 2A, 2B et 2C illustrent trois étapes de mise en oeuvre d'un procédé selon l'invention;
- la figure 3 est une vue en coupe transversale partielle d'une façade avant de véhicule automobile réalisée par le procédé des figures 2A à 2C; et
- les figures 4A, 4B, 4C et 5 correspondent aux figures 2A, 2B, 2C et 3 respectivement et illustrent une variante du procédé.

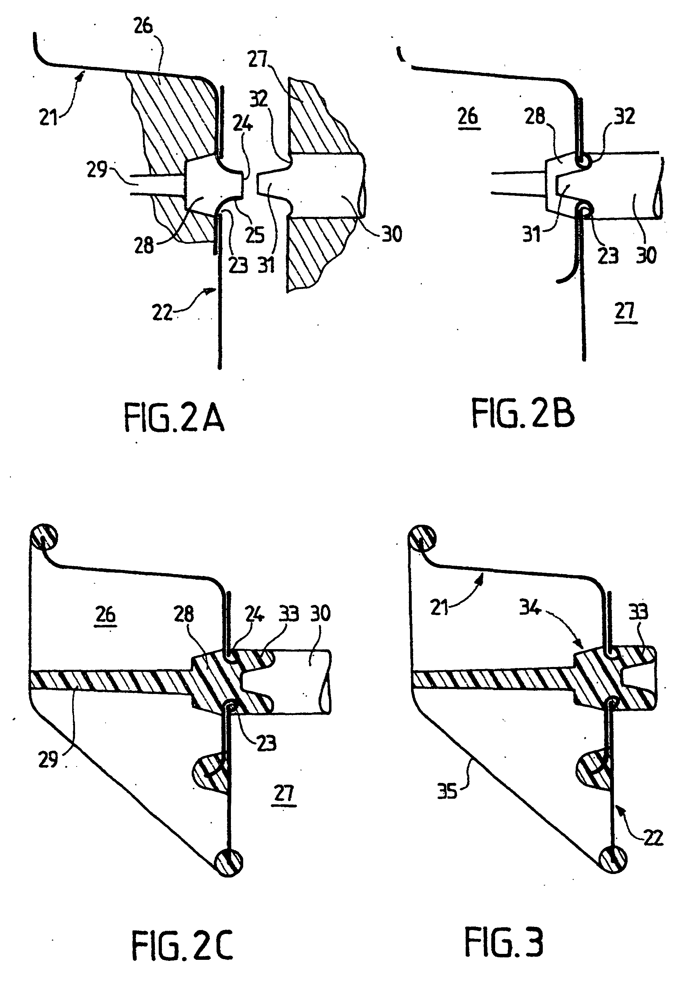

On voit aux figures 2A à 2C une poutre supérieure 21 de façade avant de véhicule automobile, et une béquille 22, réalisées comme précédemment en tôle. Des formes d'assemblage complémentaires sont formées sur la poutre 21 et sur la béquille 22.

La forme d'assemblage de la béquille est ici constituée par un simple trou circulaire 23.

La forme d'assemblage de la poutre est constituée d'un trou 24 dont les bords sont emboutis pour former une sorte de buse convergente 25. La base de la buse 25 a un diamètre sensiblement égal à celui du trou 23, de sorte que le trou 24 a un diamètre inférieur à celui du trou 23.

La buse 25 étant engagée dans le trou 23, la poutre 21 et la béquille 22 sont disposées en vue de leur surmoulage dans un moule en deux parties 26 et 27, comme montré à la figure 2A.

La partie de moule 26 comporte, au niveau des formes d'assemblage, une cavité 28 dans laquelle débouche un canal 29 d'injection de matière plastique.

Un poinçon 30 cylindrique est monté coulissant dans la partie de moule 27, située du côté de l'extérieur de la poutre et vers laquelle est tournée la buse 25, en vis-à-vis de la cavité 28. Ce poinçon peut se déplacer entre une position sortie représentée aux figures 2A et 2B et une position rétractée représentée à la figure 2C.

La tête du poinçon 30 forme un tronc de cône 31 effilé vers son extrémité. L'extrémité du tronc de cône 31 a un diamètre légèrement inférieur à celui du trou 24 et la base du tronc de cône 31 a un diamètre inférieur à celui du corps du poinçon et est raccordée à celui-ci par une surface 32 ayant sensiblement la forme d'une gouttière annulaire dont la concavité est orientée axialement vers l'extrémité du poinçon.

Une fois la poutre 21 et la béquille 22 disposées dans le moule, ce dernier est fermé, avec le poinçon 30 en position sortie, comme montré à la figure 2B.

Au cours de cette fermeture, la tête 31 du poinçon 30 pénètre dans le trou 24 et l'élargit progressivement, tout en pénétrant dans la cavité 28. Lorsque le bord du trou atteint le fond de la gouttière 32, il est retourné vers les bords du trou 23 assurant ainsi le sertissage de la tôle 22 sur la tôle 21.

Comme montré à la figure 2C, le poinçon 30 est alors rétracté dans la partie de moule 27 et de la matière plastique est injectée depuis le canal 29 dans la cavité 28. Il est possible à cet égard de prévoir un ressort non représenté sollicitant le poinçon en position sortie et permettant son recul sous la pression d'injection, sans commande séparée. La matière plastique traverse les trous sertis 23 et 24 et pénètre dans l'alésage de guidage du poinçon 30 jusqu'à ce dernier, en formant une masse 33 reliée à la matière plastique de la cavité 28 à travers les trous 23 et 24. Le sertissage est ainsi noyé dans la matière plastique qui l'immobilise.

Le moule est ensuite ouvert et le poinçon est ramené en position sortie, faisant ainsi office d'éjecteur. On obtient ainsi la pièce de la figure 3 où un noyau 34 de matière plastique surmoule la zone de sertissage, rendant ainsi irréversible l'assemblage des tôles 21 et 22. Ce noyau 34 est relié au réseau de nervures 35 pour augmenter la tenue mécanique de l'ensemble.

Les tôles peuvent être par exemple en acier ou en aluminium. Le surmoulage peut être réalisé en toute matière injectable convenable.

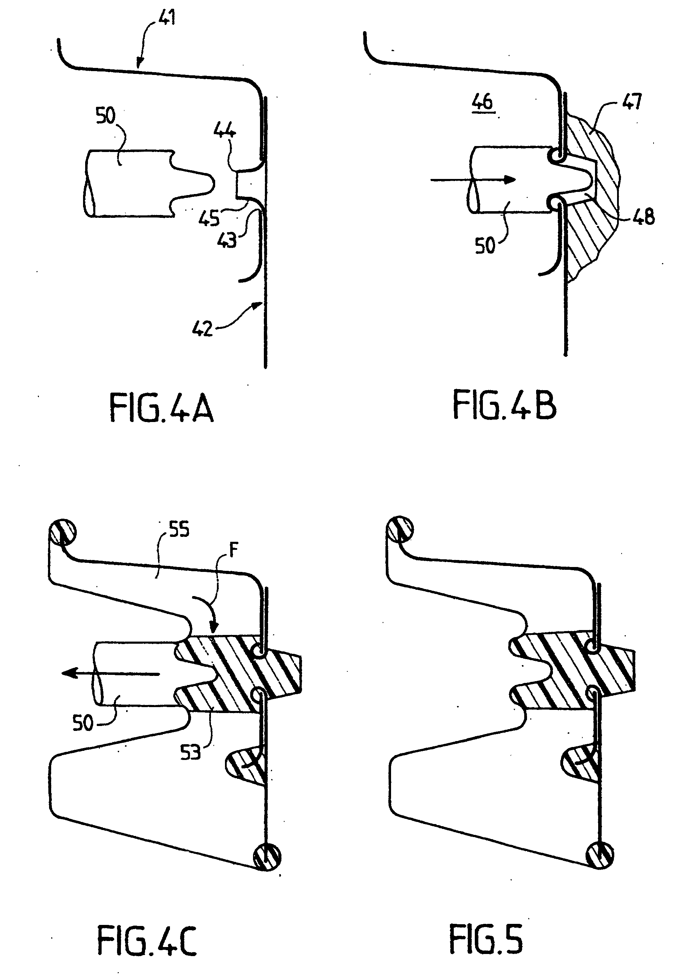

La poutre 41 et la béquille 42 représentées sur la figure 4A diffèrent de la poutre 21 et de la béquille 22 décrites précédemment par l'inversion de leurs formes d'assemblage respectives, à savoir que c'est la béquille 42 qui présente une buse 45 terminée par un trou 44 et s'étendant à travers un trou 43 de la poutre. C'est la partie de moule 46, située du côté de l'intérieur de la poutre, qui porte le poinçon 50, dont la forme est semblable à celle du poinçon 30, tandis que la partie 47 du moule, située du côté de l'extérieur de la poutre, définit une cavité de moulage 48, lorsque le moule est fermé comme montré sur la figure 4B. Il n'est pas nécessaire de prévoir un canal d'injection pour alimenter la cavité 48, la matière plastique qui forme les nervures de rigidification 55 pouvant s'écouler, selon la flèche F de la figure 4C, pour former la masse 53 en regard du poinçon 50 pendant le recul de celui-ci et de là traverser les trous des tôles pour remplir la cavité 48. Pour réaliser le sertissage, le poinçon 50 agit sur la buse 45 d'une manière identique à celle décrite précédemment.

Bien que le procédé selon l'invention ait été décrit dans son application à la liaison de deux tôles seulement, il est bien entendu qu'il peut être utilisé avec un nombre de tôles plus élevé.

## Revendications

1. Procédé d'assemblage d'au moins deux tôles (21, 22), dans lequel on crée sur lesdites tôles des formes d'assemblage complémentaires (23-25) que l'on enrobe par surmoulage de matière plastique pour maintenir les tôles en position assemblée, **caractérisé en ce qu'**il comporte une étape de sertissage desdites formes d'assemblage complémentaires dans le moule (26, 27) de surmoulage.

2. Procédé selon la revendication 1, dans lequel le sertissage est réalisé lors de la fermeture du moule, par des moyens de sertissage (30) portés par une partie (27) de celui-ci.

3. Procédé selon l'une des revendications 1 et 2, dans lequel on enrobe les formes d'assemblage complémentaires en injectant la matière plastique dans une cavité (28) du moule libérée par le déplacement des moyens de sertissage (30).

4. Procédé selon la revendication 3, dans lequel ledit déplacement des moyens de sertissage est provoqué par la pression d'injection de la matière plastique.

5. Procédé selon l'une des revendications 3 et 4, dans lequel ledit déplacement s'effectue à l'encontre de moyens de rappel élastique, ces derniers provoquant lors de l'ouverture du moule un mouvement inverse des moyens de sertissage qui facilite le démoulage.

6. Procédé selon l'une des revendications précédentes, dans lequel lesdites formes d'assemblage complémentaires comprennent une buse convergente (25) formée dans l'une des tôles autour d'un premier trou (24) ménagé dans celle-ci et faisant saillie à travers un second trou (23) ménagé dans au moins une autre tôle, le sertissage étant réalisé par l'élargissement du premier trou et le roulage de la buse autour du bord du second trou.

7. Moule d'injection pour la mise en oeuvre du procédé selon l'une des revendications précédentes, comprenant des moyens de sertissage (30) montés mobiles dans une (27) des parties du moule, lesdits moyens de sertissage comprennent un poinçon (30) constitué d'un corps monté coulissant dans un orifice de ladite partie (27), la tête du poinçon (30) formant un tronc de cône (31) qui va en se rétrécissant vers l'extrémité libre du poinçon, la base du tronc de cône (31) a un diamètre inférieur à celui du corps du poinçon **caractérisé en ce que** ladite base du tronc de cône est raccordée à celui-ci par une gouttière annulaire (32) dont la concavité est tournée vers ladite extrémité libre, ladite gouttière annulaire occupant toute la zone de raccordement entre la base dudit tronc de cône (31) et le corps dudit poinçon (30).

8. Utilisation du procédé selon l'une des revendications 1 à 6 et/ou du moule selon la revendications 7 pour la réalisation d'une façade avant de véhicule automobile.

## Claims

1. Method for assembling at least two metal sheets (21, 22), in which method complementary assembly shapes (23-25) are created on the said metal sheets and coated by overmoulding with plastic to hold the sheets in the assembled position, **characterized in that** the method comprises a step of crimping the said complementary assembly shapes in the overmoulding mould (26, 27).

2. Method according to Claim 1, in which the crimping is carried out as the mould is closed, by crimping means (30) borne by a part (27) of this mould.

3. Method according to one of Claims 1 and 2, in which the complementary assembly shapes are coated by injecting plastic into a cavity (28) of the mould freed by the movement of the crimping means (30).

4. Method according to Claim 3, in which the said movement of the crimping means is brought about by the pressure with which the plastic is injected.

5. Method according to one of Claims 3 and 4, in which the said movement is against the effect of elastic return means, the latter, as the mould opens, causing a reverse movement of the crimping means making release from the mould easier.

6. Method according to one of the preceding claims, in which the said complementary assembly shapes comprise a convergent nozzle (25) formed in one of the sheets around a first hole (24) formed therein and projecting through a second hole (23) formed in at least one other sheet, crimping being performed by enlarging the first hole and rolling the nozzle around the edge of the second hole.

7. Injection mould for implementing the method according to one of the preceding claims, comprising crimping means (30) mounted so that they can move in one (27) of the parts of the mould, the said crimping means comprise a punch (30) consisting of a body mounted to slide in an orifice of the said part (27), the head of the punch (30) forming a cone frustum (31) which narrows towards the free end of the punch, the base of the cone frustum (31) has a diameter smaller than that of the body of the punch, **characterized in that** the said base of the cone frustum is connected to this punch by an annular channel (32) the concave side of which faces towards the said free end, the said annular channel occupying all the region where the base of the said cone frustum (31) and the body of the said punch (30) meet.

8. Use of the method according to one of Claims 1 to 6 and/or of the mould according to Claim 7 for producing a front end of a motor vehicle.

## Patentansprüche

1. Verfahren zum Zusammenbau von mindestens zwei Blechen (21, 22), bei dem auf den Blechen ergänzende Zusammenbauformen (23-25) geschaffen werden, die durch Gussstückformen mit Kunststoffmaterial umhüllt werden, um die Bleche in zusammengebauter Position zu halten, **dadurch gekennzeichnet, dass** das Verfahren einen Schritt des Falzens der ergänzenden Zusammenbauformen in der Form (26, 27)für das Gussstückformen umfasst.

2. Verfahren nach Anspruch 1, wobei das Falzen während des Schließens der Form durch Falzmittel (30) erfolgt, die durch einen Teil (27) der Form getragen werden.

3. Verfahren nach einem der Ansprüche 1 und 2, wobei die ergänzenden Zusammenbauformen umhüllt werden, indem Kunststoffmaterial in eine Formausnehmung (28) eingespritzt wird, die durch das Verschieben der Falzmittel (30) freigemacht ist.

4. Verfahren nach Anspruch 3, wobei das Verschieben der Falzmittel durch den Einspritzdruck des Kunststoffmaterials ausgelöst wird.

5. Verfahren nach einem der Ansprüche 3 und 4, wobei das Verschieben mit Hilfe von Mitteln zur elastischen Rückführung erfolgt, wobei letztere beim Öffnen der Form eine umgekehrte Bewegung der Falzmittel verursachen, welche das Entformen erleichtert.

6. Verfahren nach einem der vorangegangenen Ansprüche, wobei die ergänzenden Zusammenbauformen eine konvergierende Düse (25), welche in einem der Bleche um ein erstes Loch (24) herum ausgebildet ist, das in dem Blech angeordnet ist und über ein zweites Loch (23) vorsteht, das in mindestens einem anderen Blech angeordnet ist, umfassen, wobei das Falzen durch Verbreitern des ersten Lochs und Rollen der Düse um den Rand des zweiten Lochs erfolgt.

7. Spritzform für das Umsetzen des Verfahrens gemäß einem der vorangegangenen Ansprüche, welche Falzmittel (30) umfasst, die beweglich in einem (27) der Formenteile befestigt sind, wobei die Falzmittel einen Dorn (30) umfassen, welcher aus einem Körper besteht, der gleitend in einer Öffnung des Teils (27) befestigt ist, wobei der Kopf des Dorns (30) einen Kegelstumpf (31) bildet, der sich zum freien Ende des Dorns hin verjüngt, wobei die Basis des Kegelstumpfs (31) einen Durchmesser aufweist, der geringer als jener des Körpers des Dorns ist, **dadurch gekennzeichnet, dass** die Basis des Kegelstumpfs mit letzterem über eine ringförmige Rinne (32) verbunden ist, deren Konkavität zum freien Ende hin ausgerichtet ist, wobei die ringförmige Rinne den gesamten Verbindungsbereich zwischen der Basis des Kegelstumpfs (31) und dem Körper des Dorns (30) einnimmt.

8. Anwendung des Verfahrens nach einem der Ansprüche 1 bis 6 und/oder der Form nach Anspruch 7 zur Herstellung einer Vorderseite eines Kraftfahrzeuges.
